# EUROPEAN PATENT APPLICATION

(11) **EP 4 838 051 A1**
(43) Date of publication of application: **11.11.2026**
(21) Application number: 26172452.0
(22) Date of filing: 15.04.2026
(51) Int. Cl.: F01D 5/18

(54) **TURBINE ENGINE COMPONENT WITH A COOLING CIRCUIT**

(30) Priority: 16.04.2025 US 202519180546
(71) Applicant: General Electric Company, Cincinnati, Ohio 45215 (US)
(72) Inventor: HOFFMAN, James Michael, Springdale, 45246 (US); FELDMANN, Kevin Robert, Springdale, 45246 (US); DOOLEY, Weston Nolan, Springdale, 45246 (US)
(74) Representative: Openshaw & Co.

(57) **Abstract**

A turbine engine includes a fan section (18), a compressor section (22), combustion section (30), and turbine section (32) in serial flow arrangement. A component, like an airfoil (104), can receive a cooling fluid flow (C). A first cooling circuit (140) is configured to provide the cooling fluid flow (C) to the component. The first cooling circuit (140) includes a first flow passage (142) at a pressure side (116), a second flow passage (144) receiving the cooling fluid flow (C) from the first flow passage (142), and a third flow passage (146) positioned at a suction side (118), and configured to receive the cooling fluid flow (C) from the second flow passage (144).

## Description

### TECHNICAL FIELD

The present subject matter relates generally to a turbine engine component, such as an airfoil, having a cooling circuit.

### BACKGROUND

A gas turbine engine typically includes a fan and a turbomachine. The turbomachine generally includes an inlet, one or more compressors, a combustor, and at least one turbine. The compressors compress air which is channeled to the combustor where it is mixed with fuel. The mixture is then ignited for generating hot combustion gases. The combustion gases are channeled to the turbine(s) which extracts energy from the combustion gases for powering the compressor(s), as well as for producing useful work to propel an aircraft in flight or to power a load, such as an electrical generator.

During operation of the gas turbine engine, various systems may generate a relatively large amount of heat. For example, a substantial amount of heat may be generated during operation of the thrust generating systems, lubrication systems, electric motors and/or generators, hydraulic systems, or other systems.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of a gas turbine engine, in accordance with an aspect of the present disclosure.
FIG. 2 is a perspective view of an engine component in the form of an airfoil, in accordance with an aspect of the present disclosure.
FIG. 3 is a sectional view of the airfoil of FIG. 2 taken along line III-III, illustrating a cooling circuit within the airfoil, in accordance with an aspect of the present disclosure.
FIG. 4 is a schematic view of the cooling circuit of FIG. 3 illustrating span-wise flow directions, in accordance with an aspect of the present disclosure.
FIG. 5 is a sectional view of a cooling circuit capable of use within the airfoil of FIG. 2 and having an aft chordal travel, in accordance with an aspect of the present disclosure.

### DETAILED DESCRIPTION

Aspects of the disclosure herein are directed to a cooling circuit located within an engine component, such as an airfoil. For purposes of illustration, the present disclosure will be described with respect to the cooling circuit located within an airfoil of a gas turbine engine, such as a turbine blade. It will be understood, however, that aspects of the disclosure herein are not so limited and may have general applicability within an engine, including compressors or fans, blades, vanes, shrouds, combustors, or combustor liners in non-limiting examples, as well as in non-aircraft applications or other turbine environments, such as other mobile applications and non-mobile industrial or commercial applications.

Cooling circuits within cooled engine components, like airfoils, for examples, are required to maintain a minimum pressure to prevent backflow, like hot air ingestion, into those cooled components. Maintaining at least that minimum pressure prevents or mitigates the opportunity for such hot air, which can have negative effects on cooling of the cooled engine components. Different pressure requirements can be required for different portions of the engine or engine component. For example, the pressure at a pressure side of an airfoil is different than the pressure at the suction side.

Maintaining consistent pressures within particular pressure ratios can mitigate such hot air ingestion. However, cooling circuits that are exposed to different pressures must meet minimum pressures capable of mitigating the largest pressures, which results in an inefficient excessive use cooling fluid where lesser pressures are required.

The components and cooling circuits described herein include a serpentine arrangement for a cooling circuit that can separate or space one, some, or all cavities within the cooling circuit from exposure to both a pressure side and a suction side of an airfoil. Such an arrangement prevents direct interaction with any flow passage from backflow pressures experienced at both the pressure side and the suction side of the airfoil. Such prevention permits maintaining internal pressures nearer to minimum pressure requirements, which improves pressure ratios and blowing ratios for film holes exhausting from any one flow passage. This provides for maintaining an internal pressure for a cooling circuit, and its flow passages, nearer to a minimum internal pressure, which improves overall efficiency of the use of cooling fluid within the airfoil, thereby improving overall cooling efficiency and engine efficiency.

Reference will now be made in detail to the architecture, and in particular the cooling circuit, located within a turbine blade, one or more examples of which are illustrated in the accompanying drawings. The detailed description uses numerical and letter designations to refer to features in the drawings.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first," "second," "third," "fourth," "fifth," and "sixth" may be used interchangeably to distinguish one component from another and are not intended to signify location or importance of the individual components.

The terms "forward" and "aft" refer to relative positions within a gas turbine engine or vehicle and refer to the normal operational attitude of the gas turbine engine or vehicle. For example, with regard to a gas turbine engine, forward refers to a position closer to an engine inlet and aft refers to a position closer to an engine nozzle or exhaust.

As used herein, the term "upstream" refers to a direction that is opposite the fluid flow direction, and the term "downstream" refers to a direction that is in the same direction as the fluid flow.

The term "fluid" may be a gas or a liquid, or multi-phase. The term "fluid communication" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, span-wise, chord-wise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order, and relative sizes reflected in the drawings attached hereto can vary.

The singular forms "a," "an," and "the" include plural references unless the context clearly dictates otherwise. Furthermore, as used herein, the term "set" or a "set" of elements can be any number of elements, including only one. Further still, a "set" can be described as a plurality of distinct elements, and need not refer to a particular grouping of like elements.

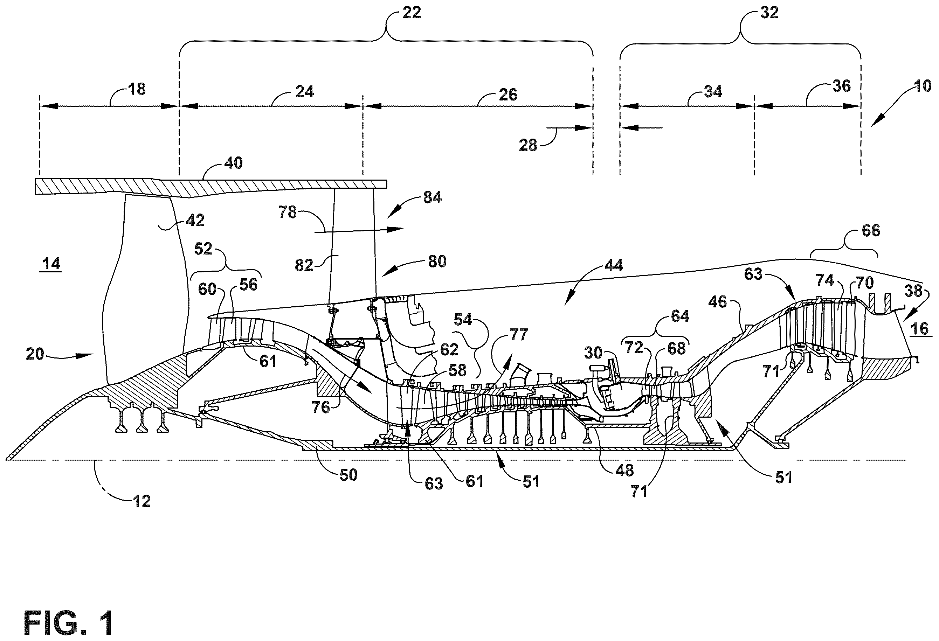

FIG. 1 is a schematic cross-sectional diagram of a gas turbine engine 10 for an aircraft. The gas turbine engine 10 has a generally longitudinally extending axis or centerline 12 extending from a forward end 14 to an aft end 16. The gas turbine engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including an HP turbine 34 and an LP turbine 36, and an exhaust section 38 in serial flow arrangement.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the gas turbine engine 10, which generates combustion gases. The core 44 is surrounded by a core casing 46, which can be coupled with the fan casing 40.

An HP shaft or spool 48 disposed coaxially about the centerline 12 of the gas turbine engine 10 drivingly connects the HP turbine 34 to the HP compressor 26. An LP shaft or spool 50 is disposed coaxially about the centerline 12 and positioned within the larger diameter annular HP spool 48. The LP shaft or spool 50 drivingly connects the LP turbine 36 to the LP compressor 24 and fan 20. The HP and LP spools 48, 50 are rotatable about the centerline 12 and couple to a plurality of rotatable elements, which can collectively define a rotor 51.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned upstream of and adjacent to the rotating compressor blades 56, 58. It is noted that the number of stages, blades, vanes, and compressor stages shown in FIG. 1 were selected for illustrative purposes only, and that other numbers are possible.

The compressor blades 56, 58 for the compressor stages 52, 54 can be mounted to a disk 61, which is mounted to the corresponding one of the HP and LP spools 48, 50, with each compressor stage 52, 54 having a corresponding disk 61. In an alternative, non-limiting example, the compressor blades 56, 58 may be part of a blisk. The static compressor vanes 60, 62 for the compressor stages 52, 54 can be mounted to the core casing 46 in a circumferential arrangement.

The HP turbine 34 and the LP turbine 36 respectively include a plurality of stages as turbine stages 64, 66 in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in an annular ring and can extend radially outwardly relative to the centerline 12, from a blade platform to a blade tip, while the corresponding static turbine vanes 72, 74 are positioned upstream of and adjacent to the rotating turbine blades 68, 70. It is noted that the number of stages, blades, vanes, and turbine stages shown in FIG. 1 were selected for illustrative purposes only, and that other numbers are possible.

The turbine blades 68, 70 for the turbine stages 64, 66 can be mounted to a disk 71, which is mounted to the corresponding one of the HP and LP spools 48, 50, with each stage having a corresponding disk 71. The static turbine vanes 72, 74 for the turbine stages 64, 66 can be mounted to the core casing 46 in a circumferential arrangement.

Complimentary to the rotor 51, the stationary portions of the gas turbine engine 10, such as the static compressor and turbine vanes 60, 62, 72, 74 among the compressor and turbine sections 22, 32 are also referred to individually or collectively as a stator 63. As such, the stator 63 can refer to the combination of non-rotating elements throughout the gas turbine engine 10.

In operation, the airflow exiting the fan section 18 is split such that a portions of the airflow are channeled into the LP compressor 24 as a pressurized air 76 and a bypass airflow 78. The pressurized air 76 passes to the HP compressor 26, which further pressurizes the air. The pressurized air 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is discharged from the gas turbine engine 10 via the exhaust section 38. The driving of the LP turbine 36 drives the LP spool 50 to rotate the fan 20 and the LP compressor 24.

A portion of the pressurized air 76 can be drawn from the compressor section 22 as a bleed airflow 77. The bleed airflow 77 can be drawn from the pressurized air 76 and provided to engine components for cooling. The temperature of pressurized air 76 entering and exiting the combustor 30 is significantly increased. As such, cooling provided by the bleed airflow 77 is supplied to downstream turbine components (e.g., the turbine blade 68) subjected to the heightened temperature environments.

The bypass airflow 78 bypasses the LP compressor 24 and core 44 and exits the gas turbine engine 10 through a stationary vane row. The stationary vane row can be an outlet guide vane assembly 80 comprising a plurality of airfoil guide vanes 82 at a fan exhaust side 84. More specifically, the plurality of airfoil guide vanes 82 can be a circumferential row of radially extending airfoil guide vanes utilized adjacent the fan section 18 to exert some directional control of the bypass airflow 78.

Some of the air supplied by the fan 20 can bypass the core 44 and be used for cooling of portions, especially hot portions, of the gas turbine engine 10, and/or used to cool or power other aspects of the aircraft upon which the gas turbine engine 10 is mounted. In the context of the gas turbine engine 10, the hot portions of the engine are normally downstream of the combustor 30, especially the turbine section 32, with the HP turbine 34 being the hottest portion as it is directly downstream of the combustion section 28. Other sources of cooling fluid can be, but are not limited to, fluid discharged from the LP compressor 24 or the HP compressor 26.

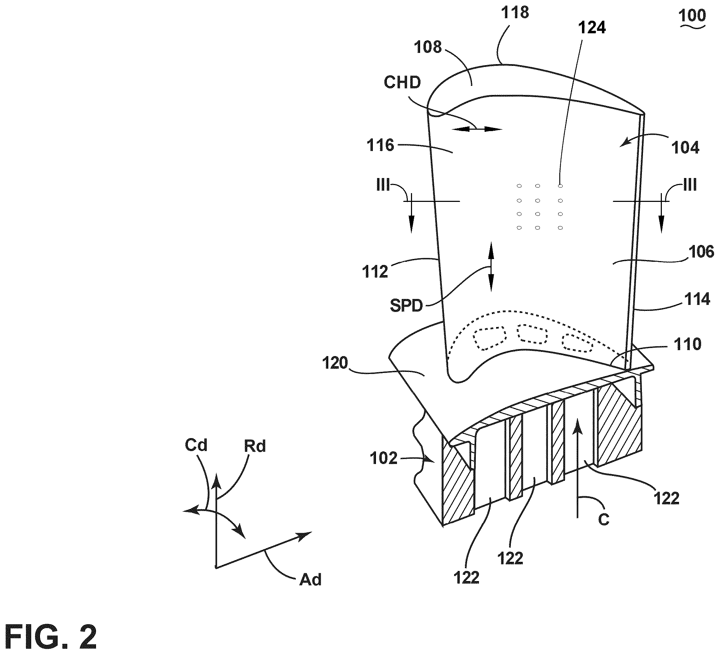

FIG. 2 is a perspective view of an engine component in the form of a turbine blade assembly 100, such as the turbine blade 68, 70 of the gas turbine engine 10 from FIG. 1. Alternatively, the engine component can be an airfoil, blade, vane, a strut, a service tube, a shroud, or a combustion liner in non-limiting examples, or any other engine component that can utilize cooling architecture.

The turbine blade assembly 100 includes a dovetail 102 and an airfoil 104. The airfoil 104 includes an outer surface 106 that extends between a tip 108 and a root 110 to define a span-wise direction (SPD), and extends between a leading edge 112 and a trailing edge 114 to define a chord-wise direction (CHD). The airfoil 104 includes a concave-shaped pressure side 116 and a convex-shaped suction side 118, which collectively define an airfoil cross-sectional shape.

The airfoil 104 mounts to the dovetail 102 at a platform 120 at the root 110. When multiple airfoils are circumferentially arranged in side-by-side relationship, the platform 120 helps to radially contain the gas turbine engine mainstream airflow and forms the radially inner wall of an annulus through which the air flows. The dovetail 102 can be configured to mount to the disk 71 on the gas turbine engine 10 of FIG. 1, in a non-limiting example. The dovetail 102 further includes at least one inlet passage, shown as three inlet passages 122, extending through the dovetail 102 to provide internal fluid communication with the airfoil 104, such as providing a cooling fluid flow (C). A set of film holes 124 are provided in the airfoil 104. While the set of film holes 124 are shown as three columns of four film holes, it should be appreciated that other numbers, orientations, or arrangements of film holes are contemplated. A film hole is a hole provided in an engine component that provides a "film," typically of a relatively cooler temperature, to escape along an exterior surface of that engine component. The film provides a barrier between the component and the exterior environment.

For the sake of reference, a set of relative reference directions, along with a coordinate system can be applied to the turbine blade assembly 100. The axial direction (Ad) can extend from the forward end 14 (FIG. 1) to the aft end 16 (FIG. 1). The axial direction (Ad) and can be arranged parallel to the centerline 12 (FIG. 1). The radial direction (Rd) extends orthogonal to the axial direction (Ad) and can extend orthogonal to the centerline 12 (FIG. 1), and the span-wise direction can be parallel to the radial direction (Rd), while an angular offset is contemplated. In such an angular offset, the span-wise direction (SPD) will be unaligned and non-parallel with the radial direction (Rd). A circumferential direction (Cd) can be defined at a given distance as a circumference of the gas turbine engine 10 (FIG. 1) relative to the centerline 12 (FIG. 1).

Materials used to form the airfoil 104, as well as the turbine blade assembly 100 or portions thereof, can include, but are not limited to, steel, refractory metals such as titanium, or superalloys based on nickel, cobalt, or iron, and ceramic matrix composites. The substrate and cooling architecture can be formed by a variety of methods, including additive manufacturing, casting, electroforming, or direct metal laser melting, in non-limiting examples. As used herein, an "additively manufactured" component will refer to a component formed by an additive manufacturing (AM) process, wherein the component is built layer-by-layer by successive deposition of material. AM is an appropriate name to describe the technologies that build 3D objects by adding layer-upon-layer of material, whether the material is plastic, ceramic, or metal. AM technologies can utilize a computer, 3D modeling software (Computer Aided Design or CAD), machine equipment, and layering material. Once a CAD model is produced, the AM equipment can read in data from the CAD file and lay down or add successive layers of liquid, powder, sheet material or other material, in a layer-upon-layer fashion to fabricate a 3D object representative of the CAD model. It should be understood that the term "additive manufacturing" encompasses many technologies including subsets like 3D Printing, Rapid Prototyping (RP), Direct Digital Manufacturing (DDM), layered manufacturing, and additive fabrication. Non-limiting examples of additive manufacturing that can be utilized to form an additively manufactured component include powder bed fusion, vat photopolymerization, binder jetting, material extrusion, directed energy deposition, material jetting, or sheet lamination. It is also contemplated that a process utilized could include printing a negative of the part, either by a refractory metal, ceramic, or printing a plastic, and then using that negative to cast the component.

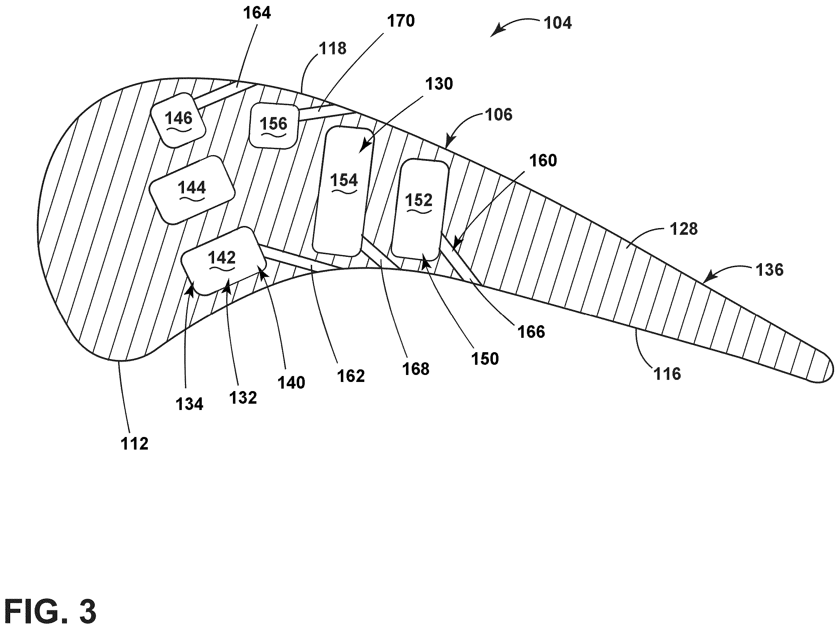

FIG. 3 shows a cross-sectional view of the airfoil 104 of FIG. 2 taken along line III-III of FIG. 2 illustrating a body 128 surrounding an interior 130 including a cooling circuit system 132. The cooling circuit system 132 is defined by a set of flow passages 134 formed within the body 128 and extending in the span-wise direction, which extends into and out of the page as shown in FIG. 3. That is, the cooling circuit system 132 is defined as a collective set of cooling circuits or flow passages that are fluidly interconnected and extending span-wise within the body 128. The body 128 can form an outer wall for the airfoil 104 and can include an exterior surface 136 defined by the pressure side 116 and the suction side 118. The cooling circuit system 132 is arranged as a first cooling circuit 140 and a second cooling circuit 150. The first cooling circuit 140 can be fluidly isolated from the second cooling circuit 150 within the airfoil 104, while the first and second cooling circuits 140, 150 may be provided with the cooling fluid flow (C) via the inlet passages 122 (FIG. 2) from a common source.

The first cooling circuit 140 includes a first flow passage 142, a third flow passage 146, and a second flow passage 144 provided between and fluidly coupling the first flow passage 142 and the third flow passage 146. The first flow passage 142 is positioned at the pressure side 116 and spaced from the suction side 118. The third flow passage 146 is positioned at the suction side 118 and spaced from the pressure side 116. The second flow passage 144 is spaced from the pressure side 116 by the first flow passage 142 and the second flow passage 144 is spaced from the suction side 118 by the third flow passage 146. In this way, it should be understood that the first flow passage 142 is provided along the pressure side 116, the third flow passage 146 is provided along the suction side 118, and that the second flow passage 144 is spaced from both the pressure side 116 and the suction side 118. It is contemplated that one or more of the first, second, and third flow passages 142, 144, 146 include turbulators or other flow devices. In a non-limiting example, the second flow passage 144 can be smooth walled, without any turbulators or flow devices, in order to reduce the pressure within the first cooling circuit 140 to obtain lower pressures within the third flow passage 146 by reducing pressures within the second flow passage 144 with smooth walls.

The second cooling circuit 150 includes a fourth flow passage 152 provided at both the pressure side 116 and the suction side 118. A fifth flow passage 154 is provided at both the pressure side 116 and the suction side 118, and is nearer to the leading edge 112 than the fourth flow passage 152. A sixth flow passage 156 is provided at the suction side 118. The sixth flow passage 156 is at least partially positioned between the second flow passage 144 and the suction side 118, while a positioning that is not between the second flow passage 144 and the suction side 118 is contemplated. The sixth flow passage 156 is spaced from the pressure side 116 by one or more of the first flow passage 142, the second flow passage 144, and the fifth flow passage 154.

A set of film holes 160 are provided in the airfoil 104 fluidly exhausting from the cooling circuit system 132 to the exterior surface 136 of the airfoil 104 to provide a cooling film along the outer surface 106. A first film hole 162 extends through the outer surface 106 to exhaust from the first flow passage 142 at the pressure side 116. A second film hole 164 extends through the outer surface 106 to exhaust from the third flow passage 146 at the suction side 118. A third film hole 166 extends through the outer surface 106 to exhaust from the fourth flow passage 152 at the pressure side 116, and a fourth film hole 168 extends through the outer surface 106 to exhaust from the fifth flow passage 154 at the pressure side 116. A fifth film hole 170 extends through the outer surface 106 to exhaust from the sixth flow passage 156 at the suction side 118. While the set of film holes 160 are shown in section in FIG. 3, it should be understood that the set of film holes 160 can be arranged as sets extending span-wise along the airfoil 104 (see FIG. 2, for example).

In a non-limiting example, the second flow passage in a series of flow passages can be between 50% and 150% (inclusive of endpoints) of the cross-sectional area of that of the first flow passage in the series of flow passages. That is, the second flow passage 144 or the fifth flow passage 154 can be between 50% and 150% of the cross-sectional area of the first flow passage 142 or the fourth flow passage 152, respectively. Greater or lesser cross-sectional areas for the second flow passage in a series are contemplated. In another non-limiting example, the last flow passage in a series of flow passages can be between 40%-100% (inclusive of endpoints) of the cross-sectional area of the first flow passage in the series of flow passages. That is, the third flow passage 146 or the sixth flow passage 156 can be between 40%-100% of the cross-sectional area of the first flow passage 142 or the fourth flow passage 152, respectively. In another non-limiting example, the cross-sectional area of the last flow passage in a series of flow passages can have a cross-sectional area that is less than the cross-sectional area of the first flow passage in the series of flow passages.

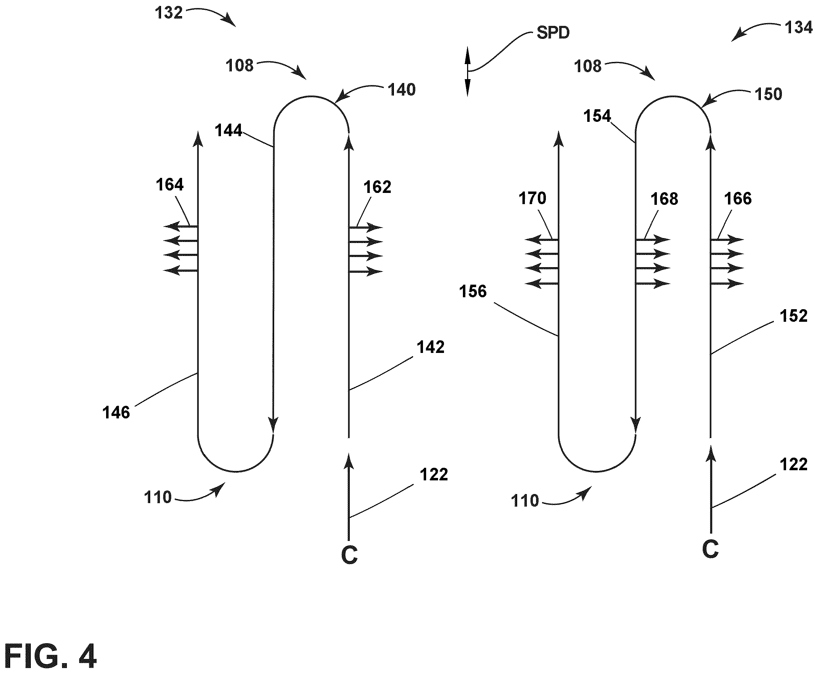

FIG. 4 shows a schematic representation of the fluid coupling between the set of flow passages 134 within the airfoil 104 (FIG. 3) for the first cooling circuit 140 and the second cooling circuit 150. The first cooling circuit 140 and the second cooling circuit 150 extend in serpentine arrangement, extending substantially in the span-wise direction (SPD). That is, each of the first and second cooling circuits 140, 150 can extend between the tip 108 and the root 110. The first flow passage 142 can receive the cooling fluid flow (C) from one inlet passage 122 at or through the root 110, and extend in a direction toward the tip 108 (FIG. 3). At or near the tip 108, the cooling fluid flow (C) turns to pass from the first flow passage 142 to the second flow passage 144, then extending toward the root 110 (FIG. 3). The cooling fluid flow (C) turns again at or near the root 110 to pass from the second flow passage 144 to the third flow passage 146, and passes toward the tip 108 (FIG. 3). It is contemplated that a portion of the cooling fluid flow (C) can be exhausted at the tip 108 (FIG. 3), such as to a tip cavity, a tip wall, or a tip rail in non-limiting examples. Additionally, at least a portion of the cooling fluid flow (C) exhausts from the first flow passage 142 through the first film hole 162 and at least a portion of the cooling fluid flow (C) exhausts from the third flow passage 146 through the second film hole 164. A right-ward orientation for the first film holes 162 can designate exhausting to the pressure side 116 (FIG. 3), while a left-ward orientation for the second film holes 164 can designate exhausting to the suction side 118 (FIG. 3).

The fourth flow passage 152 can receive the cooling fluid flow (C) from one inlet passage 122, which in some aspects, may be a shared inlet passage that also feeds the first flow passage 142 or, in other aspects, may be a separate inlet passage. The cooling fluid flow (C) passes toward the tip 108 and at or near the tip 108, the cooling fluid flow (C) turns to pass from the fourth flow passage 152 to the fifth flow passage 154. Within the fifth flow passage 154, the cooling fluid flow (C) extends toward the root 110 (FIG. 2), and, at or near the root 110, the cooling fluid flow (C) turns to pass from the fifth flow passage 154 to the sixth flow passage 156. Within the sixth flow passage 156, the cooling fluid flow (C) passes toward the tip 108. It is contemplated that a portion of the cooling fluid flow (C) can be exhausted at the tip 108, such as to a tip cavity, a tip wall, or a tip rail in non-limiting examples. Additionally, at least a portion of the cooling fluid flow (C) exhausts from the fourth flow passage 152 through the third film hole 166, at least a portion of the cooling fluid flow (C) exhausts from the fifth flow passage 154 through the fourth film hole 168, and at least a portion of the cooling fluid flow (C) exhausts from the sixth flow passage 156 through the fifth film hole 170. A right-ward orientation for the third film holes 166 and the fourth film holes 168 can designate exhausting to the pressure side 116 (FIG. 3), while a left-ward orientation for the fifth film holes 170 can designate exhausting to the suction side 118 (FIG. 3).

Cooling circuits within cooled engine components, like airfoils, maintain a minimum internal pressure to meet backflow margins and to provide consistent and effective cooling film. Maintaining such a minimum internal pressures within such backflow margins results in larger than necessary pressure ratios for flow passages and film holes along the suction side and larger than necessary ratios for film holes exhausting to the suction side, which results in inefficient use of the cooling fluid, as larger internal pressures are utilized to meet backflow margins against greater pressures along the pressure side of the airfoil.

The cooling circuit system 132 provides for an arrangement for the first cooling circuit 140 such that no flow passage has film holes exposed to both the pressure side 116 (FIG. 3) and the suction side 118 (FIG. 3) of the airfoil 104 (FIG. 3). Limiting such exposure provides isolation from any flow passage experiencing backflow pressures from both the pressure side 116 and the suction side 118, which permits maintaining internal pressures within flow passages at the suction side 118, nearer to local backflow margins, which is beneficial to maintaining consistent pressure ratios within the first cooling circuit 140 across different sides of the airfoil 104 (FIG. 3). Such maintenance of consistent pressure provides lesser pressure ratios that are nearer to the minimum internal pressure within flow passages at the suction side 118, thereby increasing or improving the efficiency of the use of the cooling fluid flow (C) and reducing excess flow volume along the suction side 118.

The arrangement of the first and second cooling circuits 140, 150 also provides for separating or shielding the terminal flow passage (and its film holes) of the first and second cooling circuits 140, 150 from the pressure side 116 by another flow passage. Such a terminal flow passage can be the last passage of the particular cooling circuit based upon the flow arrangement, like the third flow passage 146 of the first cooling circuit 140 and the sixth flow passage 156 of the second cooling circuit 150. The third flow passage 146 and the sixth flow passage 156 are separated from the pressure side 116 by the first and second flow passages 142, 144 (see FIG. 3), and therefore do not contact or confront the pressure side 116. Such separation from the pressure side 116 for the terminal flow passage separates the terminal flow passage from directly experiencing backflow pressures through the fifth holes 170 from both the pressure side 116 and the suction side 118, which is beneficial to maintaining consistent pressure ratios within the first cooling circuit 140 against both backflow pressures along the pressure side 116 and the suction side 118. Such maintenance of consistent pressure ratios within backflow margins generates a consistent cooling film along both the pressure side 116 and the suction side 118, permitting the use of lesser pressure ratios that are nearer to the minimum internal pressure locally, thereby increasing or improving the efficiency of the use of the cooling fluid flow (C). In contrast, alternative designs that include film holes along both a pressure and suction side extending from a common internal passage require that minimum internal pressures are within backflow margins for both the pressure and suction side, which are less efficient. Passages with film holes on both the pressure side and suction side require internal pressures that are greater than that required for the suction side alone, which is inefficient. Such inefficiencies are solved by utilizing the first and second cooling circuits 140, 150 as described herein.

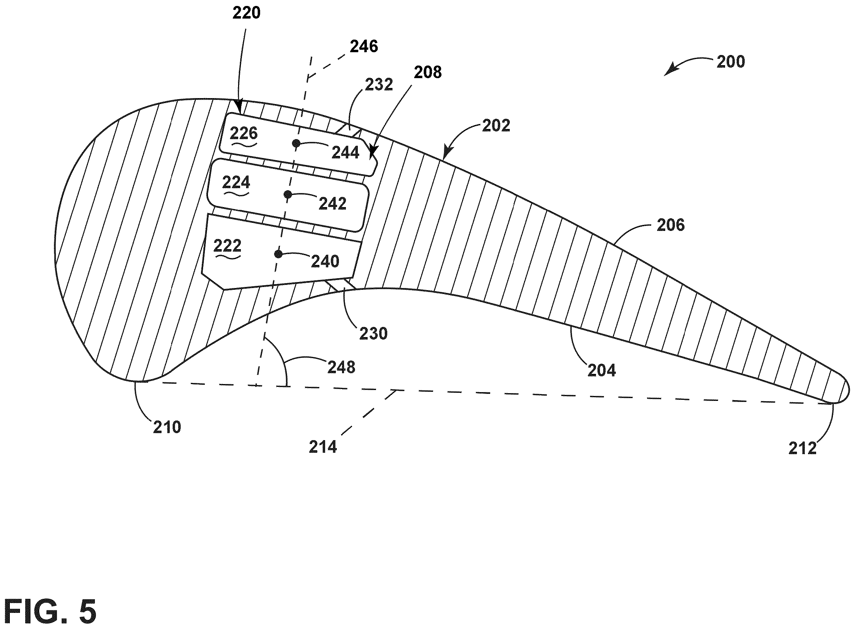

Referring to FIG. 5, a component is shown as an airfoil 200 that can be used within the gas turbine engine 10 of FIG. 1. The airfoil 200 includes a body 202 and an interior 208. The body 202 includes a first side 204 as a pressure side and a second side 206 as a suction side, with the first side 204 being separated from the second side 206. The airfoil shape for the airfoil 200 extends from a leading edge 210 to a trailing edge 212 to define a chord-wise direction therebetween, and defining a chord line 214 extending between the leading edge 210 and the trailing edge 212.

A cooling circuit 220 is provided within the body 202 and includes a first flow passage 222, a second flow passage 224, and a third flow passage 226. A first film hole 230 can extend through the body 202 from the first flow passage 222 at the first side 204, and a second film hole 232 can extend through the body 202 from the third flow passage 226 at the second side 206.

The cooling circuit 220 can include a chordal travel. A chordal travel can be a relative offset of a position of the flow passages defining the cooling circuit 220 in a chord-wise direction toward either the leading edge 210 or the trailing edge 212, as defined by the position of the flow passages defining the cooling circuit 220. More specifically, each of the first, second, and third flow passages 222, 224, 226 can define a centroid, with the first flow passage 222 having a first centroid 240, the second flow passage 224 having a second centroid 242, and the third flow passage 226 having a third centroid 244. The centroid can be defined as the mean position of the flow passage. In a non-limiting example, the centroid can be defined in a chord-wise plane extending through the first and second film holes 230, 232. A centroid axis 246 can be defined extending through the first, second, and third centroids 240, 242, 244 and intersecting the chord line 214. A centroid angle 248 can be defined between the chord line 214 and the centroid axis 246. An aft chordal travel, as shown, can be defined by the centroid angle 248 that is greater than or equal to 1 degree (1°) and less than ninety degrees (90°) and where the centroid axis 246 is oriented toward the trailing edge 212, as in FIG. 5. In another non-limiting example, the centroid axis 246 can be oriented toward the leading edge by the centroid angle 248 that is greater than or equal to 1 degree (1°) and less than ninety degrees (90°) to define a forward chordal travel. The centroid angle 248 being ninety degrees (90°) can define a cooling circuit having no chordal travel. In a non-limiting example, the centroid angle 248 can be less than or equal to 90 degrees (90°).

In another non-limiting example, it is contemplated that the centroids 240, 242, 244 defined by the flow passages 222, 224, 226 are non-aligned, such that a centroid axis intersecting all three centroids 240, 242, 244 is not possible. In such an example, it is contemplated that the line of best fit representing the centroids 240, 242, 244 for the flow passages 222, 224, 226 can be utilized and extended to intersect the chord line 214. In a non-limiting example, the line of best fit can be defined in the chord-wise plane intersecting the first and second film holes 230, 232, or can be projected onto such a plane in order to determine the centroid angle 248. In such an example, the centroid angle 248 can be defined as the angle between the chord line 214 and the line of best fit. Furthermore, suitable line fitting methods are contemplated, including but not limited to regression line fitting.

In another non-limiting example, the airfoil 200 can be any component, and need not be limited to an airfoil. In such an example, the centroid angle 248 for such a component can be defined as the angle between the centroid axis 246 and the first side 204 at the position where the centroid axis 246 intersects the first side 204.

In another non-limiting example, it is contemplated that the first, second, and third flow passages 222, 224, 226, or subsets thereof, can vary in cross-sectional shape, angle, or position as they extend in the span-wise direction. Such a variation can define a varying chord-wise position for the first, second, and third flow passages 222, 224, 226, potentially defining different centroid angles 248 at different span-wise locations. In such examples, it is contemplated that a cooling circuit can define a variable chordal travel, defined by a varying centroid angle 248 extending in the span-wise direction. In a non-limiting example, the centroid angle 248 can increase, decrease, or both while extending in the span-wise direction. It is further contemplated that the cooling circuit 220 can define a forward chordal travel, an aft chordal travel, or no chordal travel that transitions to a different one of a forward chordal travel, an aft chordal travel, or no chordal travel, or combinations thereof, resultant of the variable geometry and position of one or more of the first, second, and third flow passages 222, 224, 226.

Utilizing an arrangement for the cooling circuit 220 having a chordal travel can be beneficial in separating or shielding a terminal flow passage from the first side 204 of the airfoil 200. Such separation or shielding separates the terminal flow passage from directly experiencing backflow pressures from both the first side 204 (e.g., pressure side) and the second side 206 (e.g., suction side), which is beneficial to maintaining consistent pressure ratios within the cooling circuit 220 against both backflow pressures along the first side 204 and the second side 206. Such maintenance of consistent pressure ratios within backflow margins generates a consistent cooling film along both the first side 204 and the second side 206, permitting the use of lesser pressure ratios that are nearer to the minimum internal pressure locally, thereby increasing or improving the efficiency of the use of the cooling fluid.

Benefits associated with the components and cooling circuits described herein include a serpentine arrangement for a cooling circuit that can separate or space one, some, or all cavities within the cooling circuit from exposure to both a pressure side and a suction side of an airfoil. This prevents direct interaction with any flow passage from backflow pressures from both the pressure and suction sides of the airfoil. Such prevention permits maintaining internal pressures nearer to minimum pressure requirements at the suction side, which improves pressure ratios for film holes exhausting from any one flow passage. This provides for maintaining an internal pressure for a cooling circuit, and its flow passages, nearer to a minimum internal pressure, which improves overall efficiency of the use of cooling fluid within the airfoil, thereby improving overall cooling efficiency and engine efficiency.

Utilizing an intermediate flow passage (like the second flow passages 144, 224 of FIGS. 3-5) can provide for a pressure drop between a flow passage at the pressure side (like the first flow passages 142, 222 of FIGS. 3-5) and another flow passage at the suction side (like the third flow passages 146, 226 of FIGS. 3-5), which can permit pressure levels at the suction side to be nearer to minimum pressure levels, thereby improving overall cooling efficiency at the suction side.

Additionally, the disclosure herein provides for any flow passages that are exposed to both the pressure side and the suction side only include film holes that exhaust to the pressure side, while the terminal cavity is only exposed to the suction side and includes film holes that exhaust to the suction side. This provides for preventing any one flow passage from experiencing cavity pressures from both the pressure side and the suction side of the airfoil, which provides maintaining pressures nearer to minimum pressure requirements, thereby improving efficiency of use of the cooling fluid flow.

Additionally, sizing of the flow passages can be used to tune the pressures within the flow passages to be nearer to backflow margin pressures, which maintains pressures nearer to the minimum required pressures, thereby increasing efficiency of use of the cooling fluid, increasing overall engine efficiency.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:
A component for a turbine engine, the component comprising: an airfoil provided in a turbine section of the turbine engine, the airfoil including an exterior surface with a pressure side and a suction side, the airfoil extending from a leading edge to a trailing edge, and extending from a root to a tip; a first cooling circuit positioned within the airfoil, the first cooling circuit comprising: a first flow passage extending within the airfoil and positioned at the pressure side of the exterior surface; a second flow passage extending within the airfoil and extending from the first flow passage; and a third flow passage extending within the airfoil and positioned at the suction side of the exterior surface and extending from the second flow passage.

The component of any preceding clause, further comprising a second film hole exhausting from the third flow passage at the suction side of the exterior surface.

The component of any preceding clause, further comprising a first film hole exhausting from the first flow passage at the pressure side of the exterior surface.

The component of any preceding clause, further comprising a third film hole exhausting from the second flow passage at the pressure side of the exterior surface.

The component of any preceding clause, wherein the third flow passage is separated from the pressure side of the exterior surface by at least one of the first flow passage or the second flow passage.

The component of any preceding clause, wherein the first flow passage is separated from the suction side of the exterior surface by at least one of the second flow passage or the third flow passage.

The component of any preceding clause, wherein the second flow passage is separated from the pressure side of the exterior surface by the first flow passage and separated from the suction side by the third flow passage.

The component of any preceding clause, wherein the second flow passage is positioned within the airfoil at both the pressure side and the suction side.

The component of any preceding clause, wherein the airfoil further comprises a second cooling circuit fluidly isolated from the first cooling circuit within the airfoil.

The component of any preceding clause, wherein the second cooling circuit further comprises: a fourth flow passage extending within the airfoil and positioned at the pressure side of the exterior surface; a fifth flow passage extending within the airfoil, positioned at the pressure side, and extending from the fourth flow passage; and a sixth flow passage extending within the airfoil, positioned at the suction side, and extending from the fifth flow passage.

The component of any preceding clause, further comprising a third film hole extending through the airfoil from the fourth flow passage to the exterior surface at the pressure side; a fourth film hole extending through the airfoil from the fifth flow passage to the exterior surface at the pressure side; and a fifth film hole extending through the airfoil from the sixth flow passage to the exterior surface at the suction side.

The component of any preceding clause, wherein the fourth flow passage is positioned at the suction side.

The component of any preceding clause, wherein the fifth flow passage is further positioned at the suction side.

The component of any preceding clause, wherein the first flow passage defines a first centroid, the second flow passage defines a second centroid, and the third flow passage defines a third centroid; wherein a centroid axis is defined by the first centroid, the second centroid, and the third centroid; wherein a chord line is defined between the leading edge and the trailing edge; wherein the centroid axis intersects the chord line to define a centroid angle therebetween; and wherein the centroid angle is less than or equal to ninety degrees (90°).

The component of any preceding clause, wherein the centroid angle is less than ninety degrees (90°) and is oriented toward the trailing edge to define an aft chordal travel for the first cooling circuit.

A component for a turbine engine, the component comprising: a body including a first side separated from a second side; and a cooling circuit provided within the body, the cooling circuit comprising: a first flow passage extending within the body and positioned at the first side; a second flow passage extending within the body and extending from the first flow passage; and a third flow passage extending within the body, positioned at the second side, and extending from the second flow passage; wherein the third flow passage is spaced from the first side by at least one of the first flow passage or the second flow passage.

The component of any preceding clause, further comprising a first film hole exhausting from the first flow passage through the first side; and a second film hole exhausting from the third flow passage through the second side.

The component of any preceding clause, wherein the third flow passage is spaced from the first side by both the first flow passage and the second flow passage.

The component of any preceding clause, wherein the first flow passage is spaced from the second side.

The component of any preceding clause, wherein the first flow passage defines a first centroid, the second flow passage defines a second centroid, and the third flow passage defines a third centroid; wherein a centroid axis is defined by the first centroid, the second centroid, and the third centroid; wherein the centroid axis intersects the first side to define a centroid angle therebetween; and wherein the centroid angle is less than or equal to ninety degrees (90°).

## Claims

1. A turbine engine (10) comprising:
a fan section (18), a compressor section (22), a combustion section (28), and a turbine section (32) in serial flow arrangement; and
an airfoil (104) provided in one of the fan section (18), the compressor section (28), or the turbine section (32), the airfoil (104) configured to receive a cooling fluid flow (C), and the airfoil (104) comprising:
a body (128) defining an interior (130) and an exterior surface (136), extending from a leading edge (112) to a trailing edge (114) defining a chord-wise direction therebetween, extending from a root (110) to a tip (108) defining a span-wise direction therebetween, and the exterior surface (136) including a pressure side (116) and a suction side (118); and
a first cooling circuit (140) configured to receive the cooling fluid flow (C) from the interior (130), the first cooling circuit comprising:
a first flow passage (142) extending span-wise within the interior (130) and positioned at the pressure side (116);
a second flow passage (144) extending span-wise within the interior (130) and configured to receiving the cooling fluid flow (C) from the first flow passage (142); and
a third flow passage (146) extending span-wise within the interior (130) and positioned at the suction side (118), and configured to receive the cooling fluid flow (C) from the second flow passage (144).

2. The turbine engine (10) of claim 1, further comprising a second film hole (164) exhausting from the third flow passage (146) at the suction side (118).

3. The turbine engine (10) of claim 2, further comprising a first film hole (162) exhausting from the first flow passage (142) at the pressure side (116).

4. The turbine engine (10) of claim 3, further comprising a third film hole (166) exhausting from the second flow passage (144) at the pressure side (116).

5. The turbine engine (10) of any of claims 1 to 4, wherein the third flow passage (146) is separated from the pressure side (116) by at least one of the first flow passage (142) or the second flow passage (144).

6. The turbine engine (10) of claim 5, wherein the first flow passage (142) is separated from the suction side (118) by at least one of the second flow passage (144) or the third flow passage (146).

7. The turbine engine (10) of claim 6, wherein the second flow passage (142) is separated from the pressure side (116) by the first flow passage (142) and separated from the suction side (118) by the third flow passage (146).

8. The turbine engine (10) of any of claims 1 to 7, wherein the second flow passage (144) is positioned within the body at both the pressure side (116) and the suction side (118).

9. The turbine engine (10) of any of claims 1 to 8, wherein the airfoil (104) further comprises a second cooling circuit (150) fluidly isolated from the first cooling circuit (140) within the interior (130).

10. The turbine engine (10) of claim 9, wherein the second cooling circuit (150) further comprises:
a fourth flow passage (152) extending span-wise within the interior (130) and positioned at the pressure side (116);
a fifth flow passage (154) extending span-wise within the interior (130), positioned at the pressure side (116), and configured to receiving the cooling fluid flow (C) from the fourth flow passage (152); and
a sixth flow passage (156) extending span-wise within the interior (130), positioned at the suction side (118), and configured to receive the cooling fluid flow (C) from the fifth flow passage (154).

11. The turbine engine (10) of claim 10, further comprising a third film hole (166) exhausting from the fourth flow passage (152) at the pressure side (116);
a fourth film hole (168) exhausting from the fifth flow passage (170) at the pressure side (116); and
a fifth film hole (170) exhausting from the sixth flow passage (156) at the suction side (118).

12. The turbine engine (10) of claim 10 or 11, wherein the fourth flow passage (152) is positioned at the suction side (118).

13. The turbine engine (10) of any of claims 10 to 12, wherein the fifth flow passage (154) is further positioned at the suction side (118).

14. The turbine engine (10) of any of claims 10 to 13, wherein the first flow passage (142) defines a first centroid (240), the second flow passage (144) defines a second centroid (242), and the third flow (146) passage defines a third centroid (244);
wherein a centroid axis (246) is defined by the first centroid (240), the second centroid (242), and the third centroid (246);
wherein a chord line (214) is defined between the leading edge (112) and the trailing edge (114);
wherein the centroid axis (246) intersects the chord line (214) to define a centroid angle (248) therebetween; and
wherein the centroid angle (248) is less than or equal to ninety degrees (90°).

15. The turbine engine (10) of claim 14, wherein the centroid angle (248) is less than ninety degrees (90°) and is oriented toward the trailing edge (114) to define an aft chordal travel for the first cooling circuit (140).
